# EUROPÄISCHE PATENTSCHRIFT

(11) **EP 2 920 034 B1**
(45) Veröffentlichungstag und Bekanntmachung des Hinweises auf die Patenterteilung: **07.02.2018**
(21) Anmeldenummer: 13791769.6
(22) Anmeldetag: 05.11.2013
(51) Int. Cl.: B60R 22/30, A44B 11/25, B60R 22/18

(54) **SICHERHEITSGURTEINRICHTUNG IN EINEM FAHRZEUG**
SAFETY BELT DEVICE IN A VEHICLE
DISPOSITIF DE CEINTURE DE SÉCURITÉ DANS UN VÉHICULE

(30) Priorität: 14.11.2012 DE 102012022278
(43) Veröffentlichungstag der Anmeldung: 23.09.2015
(73) Patentinhaber: Volkswagen Aktiengesellschaft, 38440 Wolfsburg (DE)
(72) Erfinder: MÖKER, Carsten, 38471 Rühen (DE)
(86) Internationale Anmeldenummer: PCT/EP2013/073029
(87) Internationale Veröffentlichungsnummer: WO 2014/075952

(56) Entgegenhaltungen:
- DE-A1- 2 741 297
- DE-A1-102008 037 963
- JP-A- 2009 166 586
- US-A- 4 979 764

## Beschreibung

Die Erfindung betrifft einen Gurtbeschlag für eine Sicherheitsgurteinrichtung in einem Fahrzeug nach dem Oberbegriff des Patentanspruches 1.

Die Sicherheitsgurteinrichtung eines Fahrzeuges kann beispielhaft einen Beckengurt sowie einen diagonal über den Oberkörper des Fahrzeuginsassen verlaufenden Schultergurt aufweisen. Der Beckengurt ist bei angelegtem Sicherheitsgurt über zwei seitlich gegenüberliegende, untere Anbindungspunkte am Fahrzeugaufbau verankert. Üblicherweise ist in der Fahrzeugquerrichtung innen gelegene Anlegungspunkt lösbar ausgeführt, und zwar mit einem am Beckengurt vorgesehen Gurtbeschlag, dessen Steckzunge in ein aufbauseitig verankertes Gurtschloss einsteckbar ist.

Aus der DE 42 15 384 A1 ist ein Gurtbeschlag mit einem Basisabschnitt und einer daran anschließenden Steckzunge bekannt. Im Basisabschnitt ist eine Gurtöse vorgesehen, durch die ein Gurtband geführt ist. Bei angelegtem Sicherheitsgurt teilt die Gurtöse das Gurtband in einen Beckengurtabschnitt und in einen Schultergurtabschnitt auf. Um im Crashfall den Beckengurtabschnitt des Gurtbandes zu blockieren, ist ein Klemmelement vorgesehen, das zwischen einer Freigabestellung, in der das Gurtband frei bewegbar durch die Gurtöse hindurch geführt ist, und einer Klemmstellung verstellbar ist, in der das Gurtband zwischen dem Klemmelement und einem als Widerlager wirkenden Klemmanschlag mit einer Klemmkraft festgeklemmt ist. Das Klemmelement ist um eine Drehachse zwischen der Freigabestellung und der Klemmstellung schwenkbar sowie in Richtung der Freigabestellung elastisch vorgespannt. Im normalen Fahrbetrieb ist somit das Gurtband frei bewegbar über eine Lauffläche des Klemmelementes geführt. Demgegenüber wirken im Crashfall auf das Klemmelement erhöhte Gurtkräfte. Dies führt dazu, dass das Klemmelement in einer Drehrichtung bis in die Klemmstellung verlagert wird, in der das Gurtband mit der Klemmkraft zwischen dem Klemmelement und dem Klemmanschlag festgeklemmt ist.

Im Stand der Technik weist das Klemmelement einen Klemmsteg auf, der in der Gurtband-Querrichtung verläuft. Der Klemmsteg ist in der Klemmstellung in einem Linienkontakt mit dem Gurtband, und zwar durchgängig zwischen den beiden Gurtband-Außenkanten in der Gurtband-Querrichtung. Auf diese Weise ergibt sich über die Gurtband-Querrichtung hinweg zwischen den beiden Gurtband-Außenkanten eine lineare, gleichmäßige bzw. konstante Klemmkraftverteilung.

In dynamischen Sicherheitsversuchen wurde festgestellt, dass das im Crashfall zwischen dem Klemmelement und dem Klemmanschlag festgeklemmte Gurtband-Gewebe einer übermäßig hohen Belastung ausgesetzt sein kann, wodurch die Gefahr von Gurtbandrissen besteht.

Aus der US 4 979 764 A ist ein gattungsgemäßer Gurtbeschlag bekannt, der ein Klemmelement mit einer sägezahnartigen Klemmkontur aufweist. Aus der DE 27 41 297 ist ein Gurtbeschlag für eine Sicherheitsgurteinrichtung in einem Fahrzeug bekannt, der eine Gurtöse aufweist, deren Randkontur teilweise sinusförmig ausgebildet ist. DE 27 41 297 wird als nächstliegender Stand der Technik angesehen und offenbart ein Gurtbeschlag mit den Merkmalen des Oberbegriffs des Anspruchs 1. Die Aufgabe der Erfindung besteht darin, einen Gurtbeschlag für eine Sicherheitsgurteinrichtung in einem Fahrzeug bereitzustellen, der im Crashfall die Betriebssicherheit der Sicherheitsgurteinrichtung erhöht.

Die Aufgabe ist durch die Merkmale des Patentanspruches 1 gelöst. Bevorzugte Weiterbildungen der Erfindung sind in den abhängigen Ansprüchen offenbart.

Die Erfindung beruht auf dem Sachverhalt, dass die im Rahmen dynamischer Sicherheitsversuche auftretenden Gurtkräfte zu einer Überlastung des festgeklemmten Gurtband-Gewebes führen. Dies ist unter anderem auf die vom Klemmsteg ausgeübte lineare, gleichmäßige Klemmkraftverteilung in der Gurtband-Querrichtung zurückzuführen. Vor diesem Hintergrund weist das Klemmelement und/oder der als Widerlager wirkenden Klemmanschlag eine Klemmkontur auf, mit der das Gurtband in der Klemmstellung nicht in gleichmäßiger oder in der Querrichtung linearer, geradliniger Klemmkraftverteilung beaufschlagt ist, sondern vielmehr über die Gurtbandbreite in einer nicht linearen und/oder ungleichmäßigen Klemmkraftverteilung festgeklemmt wird. Auf diese Weise wird das Gurtband-Gewebe im Klemmbereich in der Gurtband-Querrichtung partiell entlastet, wodurch die Gefahr von Gurtbandrissen reduziert ist. Im Crashfall ergibt sich durch diese spezielle Klemmkontur ein in der Gurtband-Querrichtung ungleichmäßiger sowie nicht linearer Verlauf der Kräfteverteilung.

Eine besonders bevorzugte Ausführungsvariante beruht auf der Erkenntnis, dass ein Gurtbandriss häufig an den Außenkanten des Gurtbandes eingeleitet wird. Vor diesem Hintergrund ist es besonders bevorzugt, wenn die Klemmkraftverteilung - im Vergleich zur Gurtband-Mitte - speziell an den Gurtband-Außenkanten reduziert ist oder keine Klemmkraft-Einleitung im Bereich der Außenkanten erfolgt. Entsprechend kann die Klemmkontur des Klemmelementes und/oder des Klemmanschlags in der Gurtband-Querrichtung um einen Querversatz von dem Gurtband-Außenkanten beabstandet sein.

In einer weiteren Ausführungsform kann die Klemmkontur zumindest einen Klemmvorsprung aufweisen, der von einer Grundfläche des Klemmelementes und/oder des Klemmanschlages um eine Höhe vorragt, die insbesondere kleiner oder gleich der Gurtband-Materialstärke ist. Erfindungsgemäß ist der Klemmvorsprung eine Bombierung beziehungsweise eine Ausbauchung, deren Scheitel in der Klemmstellung in etwa mittig auf das Gurtband drückt. Der Scheitel kann in der Gurtband-Querrichtung jeweils seitlich abfallende Bogenabschnitte aufweisen, die in die oben erwähnte Grundfläche des Klemmelementes/Klemmanschlags übergehen.

Zur Realisierung eines erfindungsgemäßen Gurtbeschlages kann das Klemmelement im Basisabschnitt des Gurtbeschlages um eine Drehachse zwischen der Freigabestellung und der Klemmstellung schwenkbar sein. Das Klemmelement kann zudem mittels eines Federelementes in die Freigabestellung elastisch vorgespannt sein. Im normalen Fahrbetrieb kann das Gurtband bei angelegtem Sicherheitsgurt in Gleitkontakt sowie frei bewegbar über eine Lauffläche des Klemmelementes geführt werden. In diesem Fall verbleibt das Klemmelement elastisch vorgespannt in seiner Freigabestellung. Demgegenüber wirken im Crashfall wesentlich größere Gurtkräfte auf den Gurtbeschlag und damit auch auf das Klemmelement ein. Unter Beaufschlagung dieser erhöhten Gurtkräfte kann das Klemmelement in einer Drehrichtung bis in die Klemmstellung verlagert werden. Auf diese Weise wird der Beckengurtabschnitt des Sicherheitsgurtes sicherheitsgünstig blockiert.

Das um die Drehachse schwenkbare Klemmelemente kann zumindest einen, in der oben erwähnten Drehrichtung vorauseilenden Konturabschnitt aufweisen, der um einen Längsversatz vor zumindest einem, in der Drehrichtung nacheilenden Konturabschnitt angeordnet ist. Im Crashfall kommt somit zuerst der vorauseilende Konturabschnitt in Klemmkontakt mit dem Gurtsteg, während der in der Drehrichtung nacheilende Konturabschnitt erst zeitverzögert sowie um einen Längsversatz beabstandet mit dem Gurtband in Klemmkontakt kommt.

In einer Ausführungsvariante kann der in der Drehrichtung vorauseilende Konturabschnitt in der Gurtband-Querrichtung mittig angeordnet sein und in jeweils randseitig angeordnete, nacheilende Konturabschnitte übergehen. Alternativ dazu kann der in der Drehrichtung nacheilende Konturabschnitt in der Gurtband-Querrichtung mittig angeordnet sein und in jeweils randseitig angeordnete vorauseilende Konturabschnitte übergehen.

In einer besonderen Ausführungsform kann der oben erwähnte Scheitel nicht punktförmig sowie mittig in der Querrichtung y angeordnet sein, sondern sich vielmehr in der Querrichtung über einen Mittelbereich hinweg erstrecken. Dieser Scheitelbereich kann außenseitig jeweils in seitlich abfallenden Bogenabschnitte bzw. Außenkanten übergehen. Entsprechend weist der Klemmkraftverlauf im Mittelbereich des Gurtbandes ein Plateau mit im Wesentlich konstantem Klemmkraftverlauf auf. Der Klemmsteg kann also im Mittelbereich geradellinear ausgeführt, wobei nur dessen Außenkanten abgerundet bzw. gefast sind. Bevorzugt beträgt die Länge des geradlinig und/oder linear verlaufenden Mittelbereichs des Scheitels weniger als 85%, insbesondere weniger als 75% und/oder weiter bevorzugt mehr als 50% der Gurtbandbreite.

Die Gesamtlänge des Klemmsteges kann besonders bevorzugt in einem Bereich von etwa 51 mm liegen. Die Länge der oben erwähnten Bogenabschnitte kann je Seite bei ca. 10mm liegen.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

### Es zeigen:

- Fig. 1: einen Ausschnitt einer Dreipunkt-Sicherheitsgurteinrichtung in einer Gebrauchslage, bei der der Sicherheitsgurt am Fahrzeuginsassen angelegt ist;
- Fig. 2: den Gurtbeschlag in einer Explosionsdarstellung;
- Fig. 3: eine vergrößerte Schnittansicht entlang der Schnittebene I-I aus der Fig. 1, in der das Klemmelement in der Freigabestellung gezeigt ist;
- Fig. 4: in einer Ansicht entsprechend der Fig. 3 das Klemmelement in der Klemmstellung;
- Fig. 5: in einer stark vergrößerten sowie vereinfachten Prinzipdarstellung ein Klemmelement in seiner Klemmstellung sowie ein Diagramm zur Klemmkraftverteilung;
- Fig. 6 bis 8: jeweils Perspektivdarstellungen von Klemmelementen mit unterschiedlichen Klemmkonturen, wobei die Fig. 6 nicht von der Erfindung umfasst ist; und
- Fig. 9: in einer Ansicht entsprechend der Fig. 5 eine weitere Ausführungsvariante des Klemmelements.

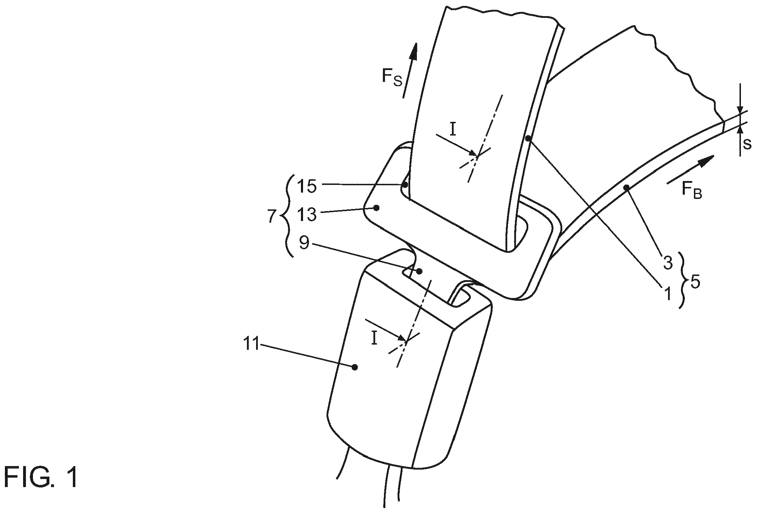

In der Teilansicht der Fig. 1 ist in einer Gebrauchslage, d.h. bei am Fahrzeuginsassen angelegtem Sicherheitsgurt, ein aus einem Schultergurtabschnitt 1 und einem Beckengurtabschnitt 3 gebildeter Dreipunkt-Sicherheitsgurt gezeigt. Der Fahrersitz sowie der Fahrzeuginsasse ist aus Gründen der Übersichtlichkeit nicht dargestellt. Das ebenfalls nicht gezeigte obere Ende des Schultergurtabschnittes 1 ist mit einem nicht dargestellten Retraktor verbunden, der zum Beispiel in der B-Säule angeordnet ist. Gemäß der Fig. 1 erstreckt sich der Beckengurtabschnitt 3 in der Fahrzeugquerrichtung y von einem nicht gezeigten äußeren Anbindungspunkt bis zu einem Gurtbeschlag 7, der mit einer Steckzunge 9 in ein Gurtschloss 11 eingesteckt ist.

Der Gurtbeschlag 1 setzt sich aus einem Basisabschnitt 13 sowie der bereits erwähnten Steckzunge 9 zusammen. Der Basisabschnitt 13 des Gurtbeschlages 1 weist eine Gurtöse 15 auf, durch die das Gurtband 5 geführt ist. Bei dem in der Fig. 1 dargestellten angelegten Sicherheitsgurt ist das Gurtband 5 an der Gurtöse 15 in den Schultergurtabschnitt 1 und in den Beckengurtabschnitt 3 aufgeteilt.

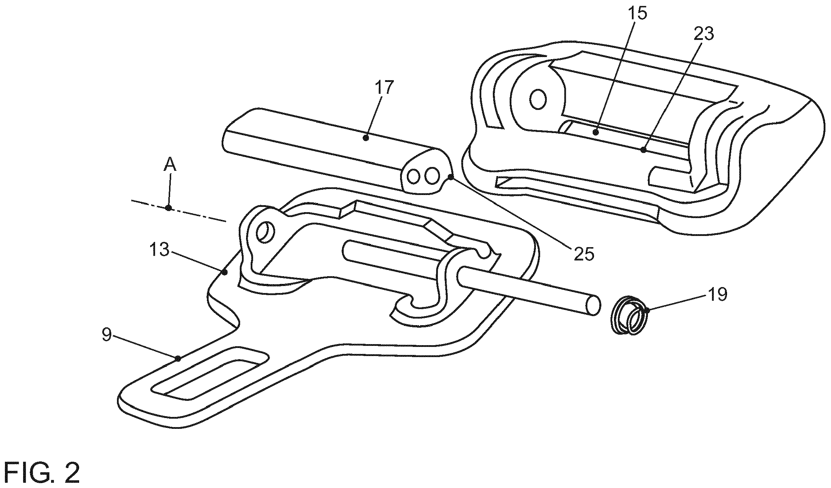

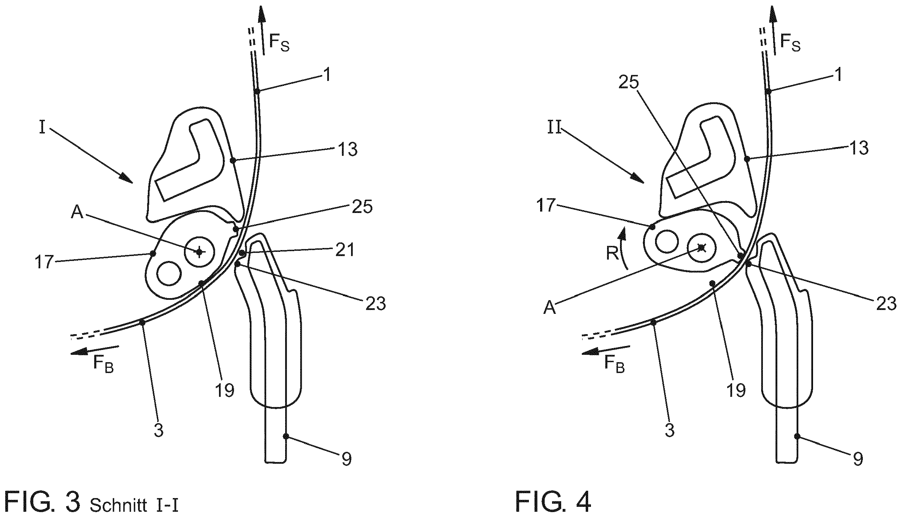

Wie aus den Fig. 2 und 3 hervorgeht, ist am Basisabschnitt 13 des Gurtbeschlages 7 ein leistenförmiges Klemmelement 17 um eine Drehachse A schwenkbar angelenkt. Das Klemmelement 17 ist im normalen Fahrbetrieb mittels einer Feder 19 (Fig. 2) in eine, in der Fig. 3 gezeigte Freigabestellung I elastisch vorgespannt. In der Freigabestellung I ist das Gurtband 5 frei bewegbar sowie in Gleitkontakt über eine Lauffläche 19 des Klemmelementes geführt.

Das Klemmelement 17 begrenzt in der Freigabestellung I zusammen mit einem am Basisabschnitt 7 angeformten Klemmansatz 23 einen Klemmspalt 21 (Fig. 2).

In der Fig. 4 ist der Gurtbeschlag im Crashfall dargestellt. Im Crashfall wirken stark erhöhte Gurtkräfte F_{B}, F_{S} auf den Beckengurtabschnitt 3 und dem Schulterabschnitt 1 des Sicherheitsgurtes. Dadurch wird auch das Klemmelement 17 mit erhöhten Gurtkräften beaufschlagt, wodurch das Klemmelement 17 in einer Drehrichtung R in die Klemmstellung II verlagert wird. In der Klemmstellung II drückt ein am Klemmelement 17 angeformter Klemmsteg 25 mit einer Klemmkraft F_{K} das Gurtband 5 gegen den Klemmansatz 23. Auf diese Weise wird im Crashfall der Beckengurtabschnitt 3 sicherheitsgünstig blockiert.

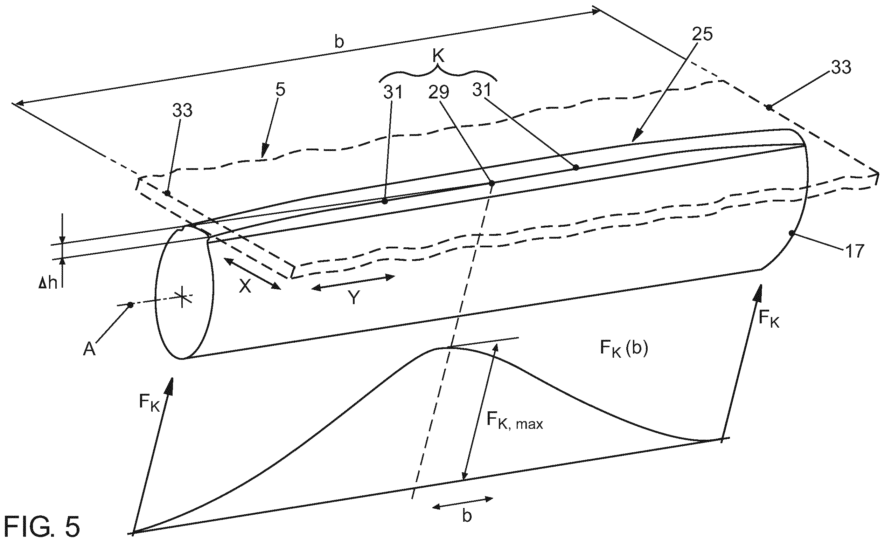

Gemäß der Fig. 5 ist der Klemmsteg 25 des Klemmelementes 17 in der Gurtband-Querrichtung y nicht geradlinig sowie plan konturiert, sondern weist der Klemmsteg 25 in der Querrichtung y eine Bombierung beziehungsweise Ausbauchung auf, und zwar mit einem in etwa in der Querrichtung y mittig angeordneten Scheitel 29 sowie in der Querrichtung y seitlich abfallenden Bogenabschnitten 31. Der Scheitel 29 sowie die seitlich davon abfallenden Bogenabschnitte 31 ergeben gemäß der Fig. 5 eine Klemmkontur K, die die über die Gurtbandbreite b die eingezeichnete Klemmkraftverteilung F(b) ergibt. Der Scheitel 29 der Bombierung ragt um eine Höhe Δh von einer Grundfläche 30 des Klemmsteges 25 vor, der kleiner oder gleich der Gurtband-Materialstärke s ist, die üblicherweise in einem Bereich von 1,2 mm liegt.

In der, in der Fig. 5 gezeigten Klemmstellung II ergibt sich zwischen den beiden Gurtband-Außenkanten 33 kein durchgängig linearer sowie gleichmäßiger Verlauf der Klemmkraftverteilung, sondern vielmehr eine nicht lineare Klemmkraftverteilung F(b) mit einer maximalen Klemmkraft F_{K,max} in der Mitte des Gurtbandes 5. Entsprechend ergibt sich speziell an den Außenkanten 33 des Gurtbandes 5 nur eine geringe oder ggf. überhaupt keine Klemmkraft-Beaufschlagung.

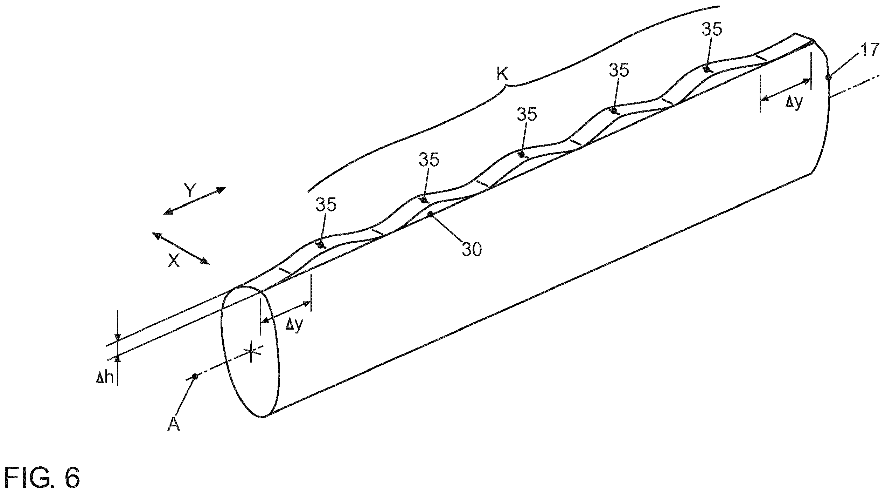

In der Fig. 6 weist der Klemmsteg 25 des Klemmelementes 17 eine in der Gurtband-Querrichtung y wellenförmige Klemmkontur K, bestehend aus insgesamt 6 Klemmvorsprüngen 35, auf. Die Fig. 6 ist nicht von der Erfindung umfasst.

Die Klemmvorsprünge 35 gehen dabei sinusförmig ineinander über, wobei die angedeutete Amplitudenhöhe Δh ebenfalls kleiner oder gleich der Gurtband-Materialstärke s sein kann.

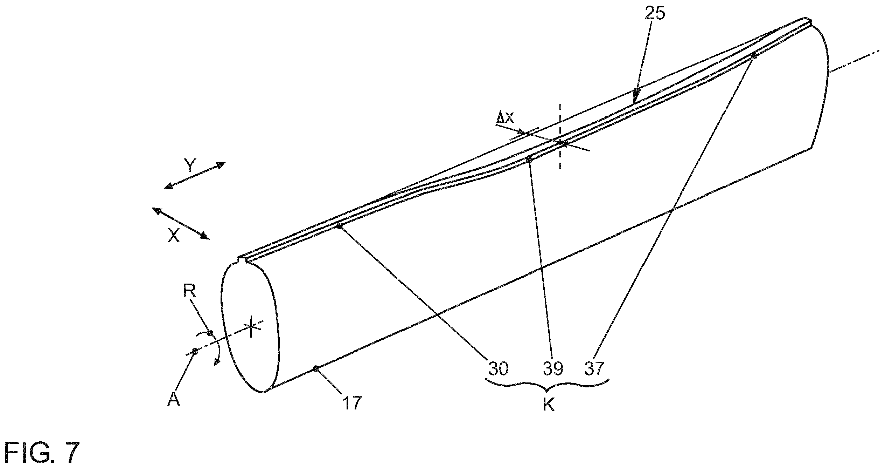

In der Fig. 7 weist die Klemmkontur K des Klemmsteges 25 in der Gurtband-Querrichtung y aufeinanderfolgende Konturabschnitte 37, 39 auf. Die Konturabschnitte 37, 39 sind in der Gurtband-Längsrichtung x betrachtet um einen Längsversatz Δx zueinander versetzt. Zudem gehen die Konturabschnitte 37, 39 sinusförmig ineinander über. In der Fig. 7 ist der mittlere Konturabschnitt 39 in der Betätigungsrichtung R gegenüber den beiden seitlichen Konturabschnitten 37 vorauseilend. Das heißt, dass beim Übergang in die Klemmstellung II zunächst der mittlere, vorauseilende Konturabschnitt 39 in Klemmverbindung mit dem Gurtband 5 kommt. Zeitverzögert sowie um einen Längsversatz Δx beabstandet kommt nachfolgend der nacheilende Konturabschnitt 37 mit dem Gurtband in Klemmverbindung.

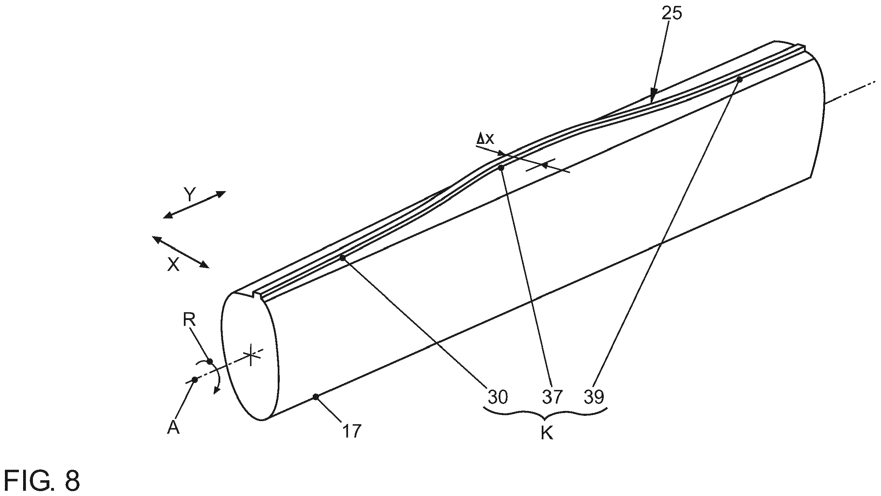

In der Fig. 8 ist demgegenüber der in der Drehrichtung R vorauseilende Konturabschnitt in der Gurtband-Querrichtung y mittig angeordnet und geht dieser in jeweils randseitig angeordnete, vorauseilende Konturabschnitte 39 über.

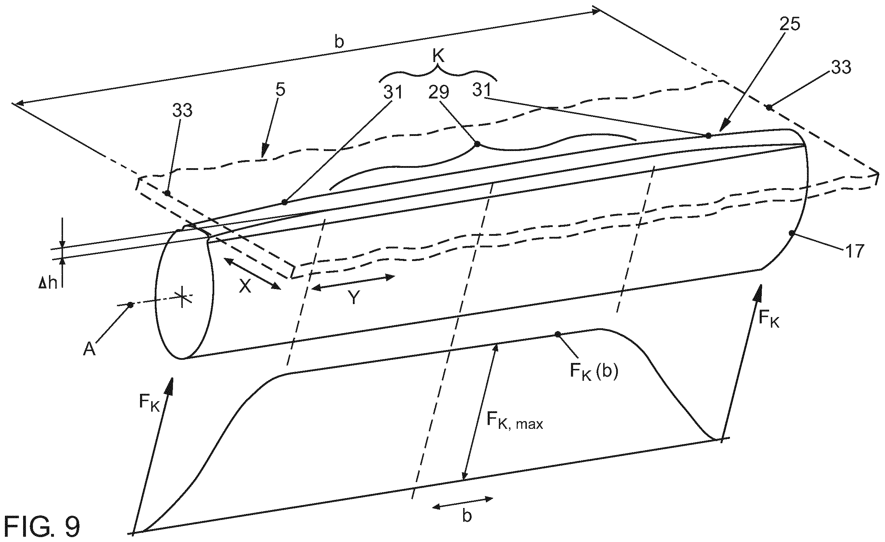

In der Fig. 9 ist in einer Ansicht entsprechend der Fig. 5 eine weitere Ausführungsvariante der Erfindung gezeigt. In Unterschied zur Fig. 5 ist in der Fig. 9 der Scheitel 29 nicht punktförmig sowie mittig in der Querrichtung y angeordnet, sondern erstreckt sich der Scheitel 29 in der Querrichtung y über einen Mittelbereich hinweg, der außenseitig jeweils in die seitlich abfallenden Bogenabschnitte 31 übergeht. Die Außenkontur des über den Mittelbereich geradlinig verlaufenden Scheitels 29 ist dabei parallel zur Drehachse A des Klemmsteges 25 ausgebildet. Entsprechend ist in der Fig. 9 die Klemmkraftverteilung F(b) nicht, wie in der Fig. 5 glockenförmig, sondern weist diese im Mittelbereich des Gurtbandes ein Plateau mit im Wesentlich konstantem Klemmkraftverlauf auf.

Gemäß der Fig. 9 ist somit der Klemmsteg 25 im Mittelbereich gerade/linear ausgeführt, wobei nur dessen Außenkanten 31 abgerundet bzw. gefast sind. Die Länge der Abrundungen 31 in der Querrichtung y können je Seite bei ca. 10mm liegen. Die Gesamtlänge des Klemmsteges 25 kann in jeder der dargestellten Ausführungsvarianten in einem Bereich von etwa 51mm liegen.

## Patentansprüche

1. Gurtbeschlag für eine Sicherheitsgurteinrichtung in einem Fahrzeug, der einen Basisabschnitt (13) und eine daran anschließende Steckzunge (9) aufweist, in welchem Basisabschnitt (13) eine Gurtöse (15) vorgesehen ist, durch die ein Gurtband (5) geführt ist und die bei angelegtem Sicherheitsgurt das Gurtband (5) in einen Schultergurtabschnitt (1) und einen Beckengurtabschnitt (3) aufteilt, und ein Klemmelement (17) aufweist, das zwischen einer Freigabestellung (I), in der das Gurtband (5) frei bewegbar durch die Gurtöse (15) geführt ist, und einer Klemmstellung (II) verstellbar ist, in der das Gurtband (5) zwischen dem Klemmelement (17) und einem Klem manschlag (23) mit einer Klemmkraft (F_{K}) festgeklemmt ist, wobei das Klemmelement (17) und/oder der Klemmanschlag (23) eine Klemmkontur (K) aufweist, mit der das Gurtband (5) in der Klemmstellung (II) über die Gurtbandbreite (b) in einer nichtlinearen und/oder ungleichmäßigen Klemmkraftverteilung (F(b)) festklemmbar ist, **dadurch gekennzeichnet, dass** die Klemmkontur (K) eine Bombierung beziehungsweise Ausbauchung ist, und zwar mit einem Scheitel (29), der in der Klemmstellung (II) mittig auf das Gurtband (5) drückt, und mit davon in der Gurtband-Querrichtung (y) abfallenden Bogenabschnitten (31).

2. Gurtbeschlag nach Anspruch 1, **dadurch gekennzeichnet, dass** die Klemmkontur (K) des Klemmelements (17) und/oder des Klemmanschlags (23) um einen Querversatz (Δy) von den Außenkanten (33) des Gurtbands (5) beabstandet ist.

3. Gurtbeschlag nach Anspruch 1 oder 2, **dadurch gekennzeichnet, dass** die Klemmkontur (K) zumindest einen Klemmvorsprung (35) aufweist, der von einer Grundfläche (30) des Klemmelements (17) und/oder des Klemmanschlags (23) um eine Höhe (Δh) vorragt, die insbesondere kleiner oder gleich der Materialstärke (s) des Gurtbandes (5) ist.

4. Gurtbeschlag nach Anspruch 1, **dadurch gekennzeichnet, dass** der Verlauf des Scheitels (29) in Querrichtung über einen Mittelbereich geradlinig ausgebildet ist.

5. Gurtbeschlag nach einem der vorhergehenden Ansprüche, **dadurch gekennzeichnet, dass** die Klemmkontur (K) in der Gurtband-Querrichtung (y) aufeinanderfolgende Konturabschnitte (37, 39) aufweist, die zueinander in der Gurtband-Längsrichtung (x) um Längsversätze (Δx) beabstandet sind, und dass insbesondere die zueinander um Längsversätze (Δx) beabstandeten Konturabschnitte (37, 39) sinusförmig ineinander übergehen.

6. Gurtbeschlag nach einem der vorhergehenden Ansprüche, **dadurch gekennzeichnet, dass** das Klemmelement (17) um eine Drehachse (A) zwischen der Freigabestellung (I) und der Klemmstellung (II) schwenkbar ist, und insbesondere in die Freigabestellung (I) elastisch vorgespannt ist, und dass das Gurtband (5) im normalen Fahrbetrieb in Gleitkontakt frei bewegbar über eine Lauffläche (19) des Klemmelements (17) geführt ist, und dass das Klemmelement (17) im Crashfall unter Beaufschlagung erhöhter Gurtkräfte (F_{B}, F_{S}) in einer Drehrichtung (R) in die Klemmstellung (II) verlagerbar ist.

7. Gurtbeschlag nach Anspruch 6, **dadurch gekennzeichnet, dass** die Klemmkontur (K) zumindest einen in der Drehrichtung (R) vorauseilenden Konturabschnitt (39) aufweist, der um den Längsversatz (Δx) vor zumindest einem in der Drehrichtung (R) nacheilenden Konturabschnitt (37) angeordnet ist.

8. Gurtbeschlag nach Anspruch 8, **dadurch gekennzeichnet, dass** der in der Drehrichtung (R) vorauseilende Konturabschnitt (39) in der Gurtband-Querrichtung (y) mittig angeordnet ist und insbesondere in jeweils randseitig angeordnete, nacheilende Konturabschnitte (37) übergeht, oder dass der in der Drehrichtung (R) nacheilende Konturabschnitt (37) in der Gurtbandquerrichtung (y) mittig angeordnet ist und insbesondere in jeweils randseitig angeordnete, vorauseilende Konturabschnitte (39) übergeht.

## Claims

1. Belt fitting for a safety belt device in a vehicle, which has a basic portion (13) and an adjoining insertion latch (9), in which basic portion (13) a belt eye (15) is provided through which a belt strap (5) is guided and which, when the safety belt is put on, divides the belt strap (5) into a shoulder belt portion (1) and a lap belt portion (3), and has a clamping element (17) which is adjustable between a release position (I), in which the belt strap (5) is guided through the belt eye (15) in a freely movable manner, and a clamping position (II), in which the belt strap (5) is firmly clamped between the clamping element (17) and a clamping stop (23) with a clamping force (F_{K}), wherein the clamping element (17) and/or the clamping stop (23) have/has a clamping contour (K) with which the belt strap (5) can be firmly clamped in the clamping position (II) over the belt strap width (b) with a non-linear and/or non-uniform clamping force distribution (F(b)), **characterized in that** the clamping contour (K) is a camber or bulge, specifically with an apex (29) which, in the clamping position (II), presses centrally onto the belt strap (5), and with arc portions (31) falling away therefrom in the transverse direction (y) of the belt strap.

2. Belt fitting according to Claim 1, **characterized in that** the clamping contour (K) of the clamping element (17) and/or of the clamping stop (23) is spaced apart from the outer edges (33) of the belt strap (5) by a transverse offset (Δy).

3. Belt fitting according to Claim 1 or 2, **characterized in that** the clamping contour (K) has at least one clamping projection (35) which projects from a main surface (30) of the clamping element (17) and/or of the clamping stop (23) by a height (Δh) which is in particular smaller than or equal to the material thickness (s) of the belt strap (5).

4. Belt fitting according to Claim 1, **characterized in that** the profile of the apex (29) in the transverse direction is of rectilinear design over a central region.

5. Belt fitting according to one of the preceding claims, **characterized in that** the clamping contour (K) has, in the transverse direction (y) of the belt strap, consecutive contour portions (37, 39) which are spaced apart from one another in the longitudinal direction (x) of the belt strap by longitudinal offsets (Δx), and **in that** in particular the contour portions (37, 39) which are spaced apart from one another by longitudinal offsets (Δx) merge sinusoidally into one another.

6. Belt fitting according to one of the preceding claims, **characterized in that** the clamping element (17) is pivotable about an axis of rotation (A) between the release position (I) and the clamping position (II), and in particular is elastically prestressed into the release position (I), and **in that**, during the normal driving mode, the belt strap (5) is guided in sliding contact in a freely movable manner over a running surface (19) of the clamping element (17), and **in that**, in the event of a crash, the clamping element (17) is displaceable in one direction of rotation (R) into the clamping position (II) while being acted upon by increased belt forces (F_{B}, F_{S}).

7. Belt fitting according to Claim 6, **characterized in that** the clamping contour (K) has at least one contour portion (39) which runs ahead in the direction of rotation (R) and is arranged by the longitudinal offset (Δx) in front of at least one contour portion (37) trailing behind in the direction of rotation (R).

8. Belt fitting according to Claim 8, **characterized in that** the contour portion (39) running ahead in the direction of rotation (R) is arranged centrally in the transverse direction (y) of the belt strap and in particular merges into trailing-behind contour portions (37) arranged in each case on the edge, or **in that** the contour portion (37) which trails behind in the direction of rotation (R) is arranged centrally in the transverse direction (y) of the belt strap and merges in particular into running-ahead contour portions (39) arranged in each case on the edge.

## Revendications

1. Ferrure de ceinture pour un dispositif de ceinture de sécurité dans un véhicule, qui présente une partie de base (13) et une languette insérable (9) se raccordant à celle-ci, partie de base (13) dans laquelle il est prévu un oeillet de ceinture (15) à travers lequel une bande de ceinture (5) est conduite et qui, lorsque la ceinture de sécurité est attachée, divise la bande de ceinture (5) en une partie de ceinture pectorale (1) et une partie de ceinture ventrale (3), et un élément de serrage (17), qui est déplaçable entre une position de libération (I), dans laquelle la bande de ceinture (5) est guidée de façon librement mobile à travers l'oeillet de ceinture (15), et une position de serrage (II), dans laquelle la bande de ceinture (5) est pincée entre l'élément de serrage (17) et une butée de serrage (23) avec une force de serrage (F_{K}), dans laquelle l'élément de serrage (17) et/ou la butée de serrage (23) présente un contour de serrage (K), avec lequel la bande de ceinture (5) peut être pincée dans la position de serrage (II) sur la largeur (b) de la bande de ceinture dans une répartition non linéaire et/ou irrégulière de la force de serrage (F(b)), **caractérisée en ce que** le contour de serrage (K) est un bombage ou un renflement, notamment avec un sommet (29), qui dans la position de serrage (II) presse au milieu sur la bande de ceinture (5), et avec des parties d'arc (31) descendant à partir de celui-ci dans la direction transversale (y) de la bande de ceinture.

2. Ferrure de ceinture selon la revendication 1, **caractérisée en ce que** le contour de serrage (K) de l'élément de serrage (17) et/ou de la butée de serrage (23) est espacé d'un décalage transversal (Δy) des bords extérieurs (33) de la bande de ceinture (5).

3. Ferrure de ceinture selon la revendication 1 ou 2, **caractérisée en ce que** le contour de serrage (K) présente au moins une saillie de serrage (35), qui sort d'une face de base (30) de l'élément de serrage (17) et/ou de la butée de serrage (23) d'une hauteur (Δh), qui est en particulier inférieure ou égale à l'épaisseur de matière (s) de la bande de ceinture (5).

4. Ferrure de ceinture selon la revendication 1, **caractérisée en ce que** l'allure du sommet (29) en direction transversale est rectiligne sur une zone centrale.

5. Ferrure de ceinture selon l'une quelconque des revendications précédentes, **caractérisée en ce que** le contour de serrage (K) présente des parties de contour (37, 39) qui se suivent dans la direction transversale (y) de la bande de ceinture, qui sont espacées l'une de l'autre de décalages longitudinaux (Δx) dans la direction longitudinale (x) de la bande de ceinture, et **en ce qu'**en particulier les parties de contour (37, 39) espacées l'une de l'autre de décalages longitudinaux (Δx) se prolongent l'une dans l'autre sous forme sinusoïdale.

6. Ferrure de ceinture selon l'une quelconque des revendications précédentes, **caractérisée en ce que** l'élément de serrage (17) peut pivoter autour d'un axe de rotation (A) entre la position de libération (I) et la position de serrage (II), et en particulier est précontraint élastiquement dans la position de libération (I), et **en ce que** la bande de ceinture (5) en fonctionnement de roulage normal est guidée de façon librement mobile en contact glissant sur une face de glissement (19) de l'élément de serrage (17), et **en ce que** l'élément de serrage (17) peut en cas de collision être déplacé dans la position de serrage (II) dans un sens de rotation (R) par l'application de forces de ceinture accrues (F_{B}, F_{S}).

7. Ferrure de ceinture selon la revendication 6, **caractérisée en ce que** le contour de serrage (K) présente au moins une partie de contour (39) placée en avant dans le sens de rotation (R), qui est disposée avec le décalage longitudinal (Δx) avant au moins une partie de contour (37) placée en arrière dans le sens de rotation (R).

8. Ferrure de ceinture selon la revendication 8, **caractérisée en ce que** la partie de contour (39) placée en avant dans le sens de rotation (R) est disposée au milieu dans la direction transversale (y) de la bande de ceinture et en particulier se prolonge en parties de contour (37) placées en arrière disposées respectivement du côté des bords, ou **en ce que** la partie de contour (37) placée en arrière dans le sens de rotation (R) est disposée au milieu dans la direction transversale (y) de la bande de ceinture et en particulier se prolonge en parties de contour (39) placées en avant disposées respectivement du côté des bords.
